# EUROPEAN PATENT APPLICATION

(11) **EP 0 951 936 A1**
(43) Date of publication of application: **27.10.1999**
(21) Application number: 98830229.5
(22) Date of filing: 16.04.1998
(51) Int. Cl.: B01J 20/00, B01J 49/00, B01J 20/34

(54) **Method for regenerating adsorbent and/or functionalized polymers**

(71) Applicant: Mancini, Valerio, 59100 Prato, Firenze (IT); Valastro, Carmelo, 59015 Carmignano (Prato) (IT); Mantovani, Roberto, 20060 Novate Milanese (Milano) (IT)
(72) Inventor: Mancini, Valerio, 59100 Prato, Firenze (IT); Valastro, Carmelo, 59015 Carmignano (Prato) (IT); Mantovani, Roberto, 20060 Novate Milanese (Milano) (IT)
(74) Representative: Mannucci, Michele

(57) **Abstract**

The process makes provision for at least two fluids with different temperatures to be passed successively through the fluid bed (7, 9) so as to induce, at each passage of fluid, a change in the volume of the granules in order to cause detachment of the adsorbed substances and enable them to be carried away by these fluids or by subsequent washes.

## Description

The present invention relates to a process for regenerating a filter bed comprising granules of an adsorbent and/or functionalized polymer. Such polymers in granular form are used for clarifying and decolorizing aqueous effluent from textile dyeing and fulling plants, from tanneries or from industrial food-processing plants and the like. Generally, the processing of such effluent comprises stages of actual processing alternating with stages of regenerating the polymer. Many different types of adsorbent polymers, which may also have functionalized groups (anionic resins), used for these purposes currently exist. These are polymers whose structure is such that they have a very high surface area of contact, which serves to adsorb molecules (for example dyes) contained in the water or other liquid to be processed. In some cases, these resins can also have functional groups and then work, not only as adsorbent polymers, but also as ion-exchange resins. Examples of such polymers are the resins Macronet MN-200 or MN400 from the company Purolite, Dialon SP or MP from the company Mitsubishi, Optipore from the company Dow Chemical, etc.

Adsorbent-polymer manufacturers currently propose regeneration processes which are, however, relatively inefficient.

The aim of the present invention is to provide a particularly effective regeneration process, in particular by facilitating the detachment of molecules adsorbed by the surface of the polymer granules, in order to maximize the active surface area of these granules in the stage of processing of process waters or aqueous effluent, and to allow this processing stage to be extended considerably before a subsequent regeneration stage is needed. The process of the present invention can also be carried out with resins containing functional groups.

The process according to the invention includes the fact that at least two fluids with different temperatures are passed successively through the fluid bed, so as to induce, at each passage of fluid, a change in the volume of the granules in order to cause detachment of the adsorbed substances and to enable them to be carried away by these fluids or by subsequent washes. These passages can be repeated an even greater number of times in succession.

In one embodiment of the process according to the invention, one of said fluids is steam and the other is a regenerative solution at room temperature, while in another embodiment, one of said fluids is a regenerative solution at a temperature of between 70 and 95°C and the other is a regenerative solution at room temperature.

In the stage of introduction of one of these regenerative solutions, a gaseous fluid, for example air (sparging), can be bubbled through the filter bed in order to help circulate the solution on the surface of the polymer granules and to give rise to a further mechanical action for detachment of the adsorbed substances from the granules.

Many different regenerative solutions can be used in the process according to the present invention, depending on the composition of the effluent to be processed. In particular, when the effluent to be processed contains surfactants, a solution of an alkaline hydroxide, for example caustic soda, potassium hydroxide or the like, can be used. When the polymer has a tendency to form functional groups with substances dissolved or suspended in the effluent to be processed, a strong acid in aqueous solution, for example hydrochloric acid, needs to be used. It is possible to use only one solution, or alternatively the various regenerative solutions can be passed through the filter bed one after the other in any order, with intervening stages of washing at relatively high temperature. This is done when the filter bed is contaminated with many different substances which necessitate regenerations in different ways.

When the aqueous effluent contains oils in suspension, for example oils used in spinning, the process can include a subsequent stage of introducing a regenerative liquid containing at least one alcohol and/or an organic solvent in general through the filter bed, these compounds having the property of dilating the granules, thereby adding their action to the physical action caused by the sudden temperature changes described above. For example, an alcohol from the group methanol, ethanol, propanol, isopropanol, butanol and isobutanol, and solvents such as acetone, a chlorinated solvent or the like can be used.

The subsequent stages of introduction of said regenerative liquids are carried out either before or after passage of the other regenerative solutions through the filter bed.

In a preferred embodiment of the invention, between the stage of passing a first regenerative solution and said subsequent stage of introducing the regenerative liquid, the filter bed undergoes an intermediate washing operation using a liquid which is preferably heated, optionally together with steam (stripping). In addition, in order to help detach the adsorbed substances by also using a mechanical action, sparging through the filter bed can even be carried out after introducing the subsequent regenerative liquid.

Said subsequent stage of introducing the regenerative liquid with sparging can be repeated two or more times, for example, with intermediate washing between two successive introductions of said regenerative liquid.

In one application example, the process according to the invention comprises:
A) heating the filter bed by circulating hot water, for example to 90°C;
B) cooling the filter bed by circulating a regenerative solution at room temperature;
C) sparging with air blown in counter-currentwise;
D) washing the filter bed while heating it;
E) optionally repeating stages (B), (C) and (D);
F) carrying out a final washing operation.

The invention also includes a plant for regenerating a filter bed of the type described above, this plant comprising means for extemporaneous heating of the filter bed. These means can include a central unit for producing hot water and means for circulating this hot water through the filter bed until the bed reaches the desired temperature, or alternatively, optionally in conjunction with said central unit, a steam generator and means for circulating the steam through the filter bed until the bed reaches the desired temperature.

A better understanding of the invention will be gained with the aid of the description and the attached drawing, which shows a non-limiting practical embodiment of this invention. In the drawing,

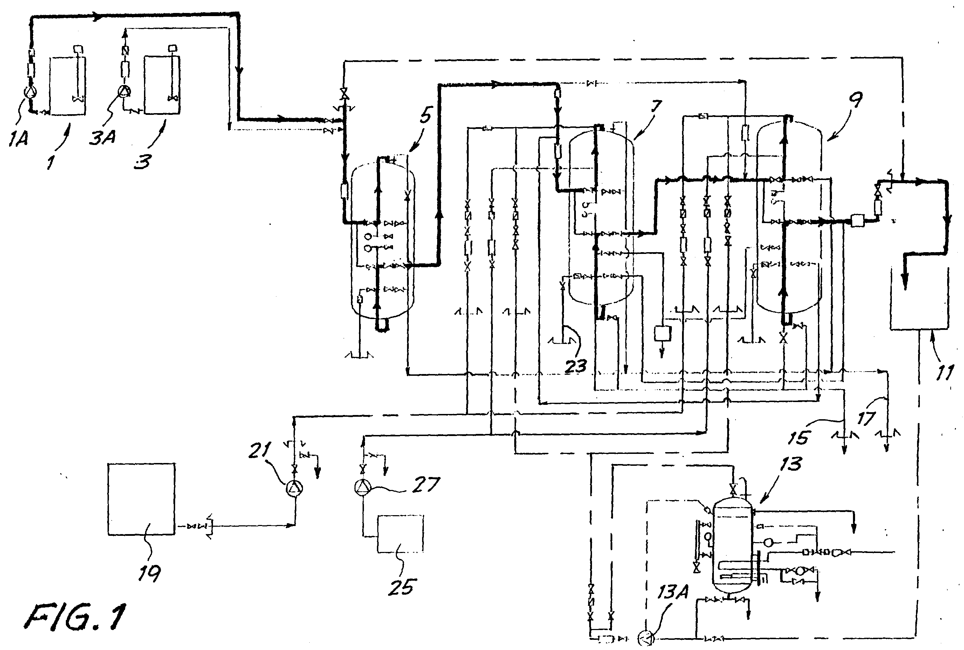

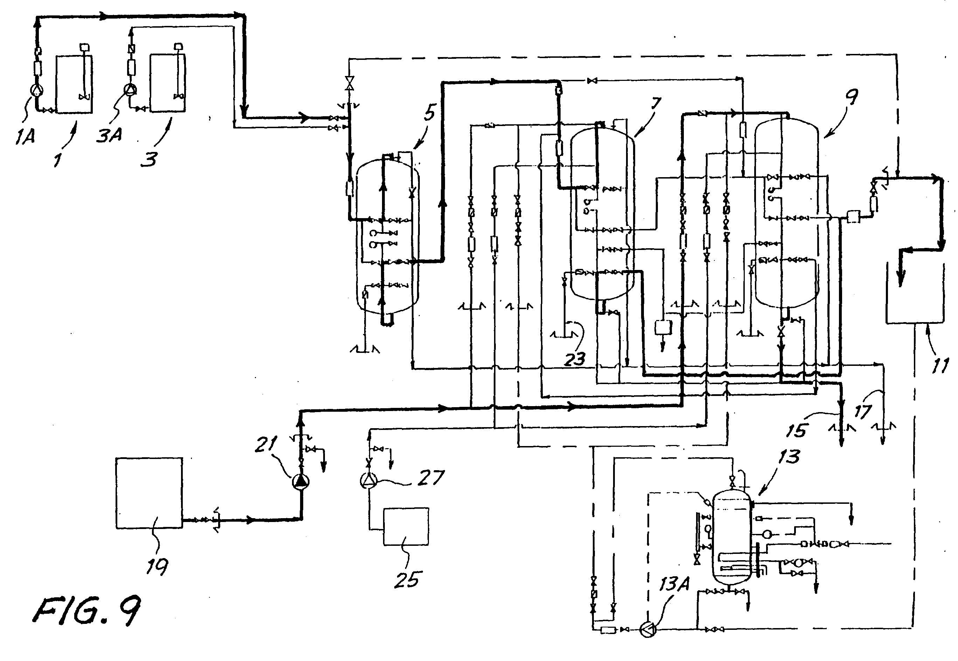

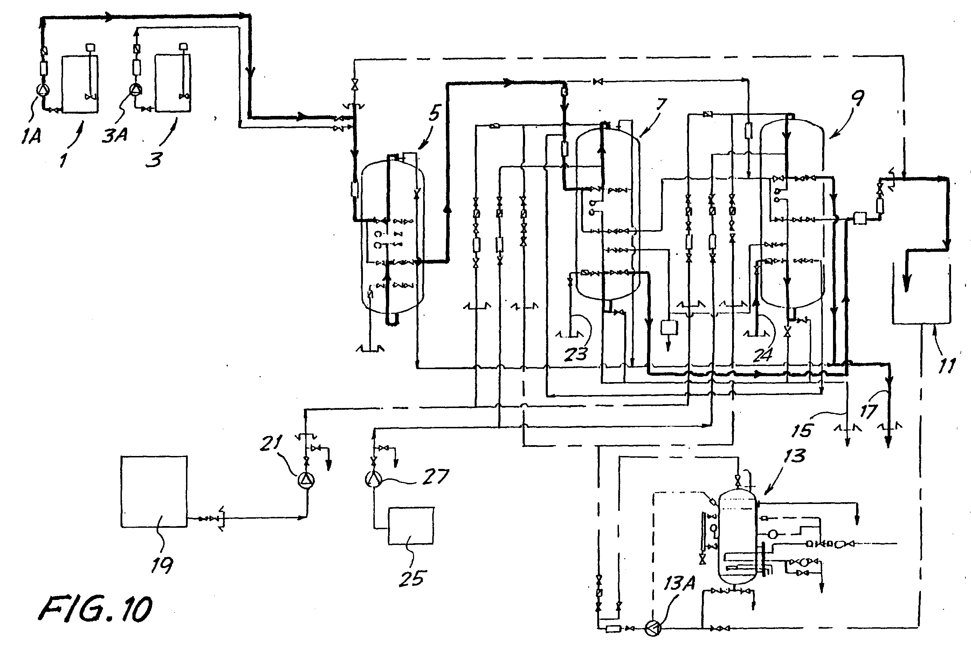

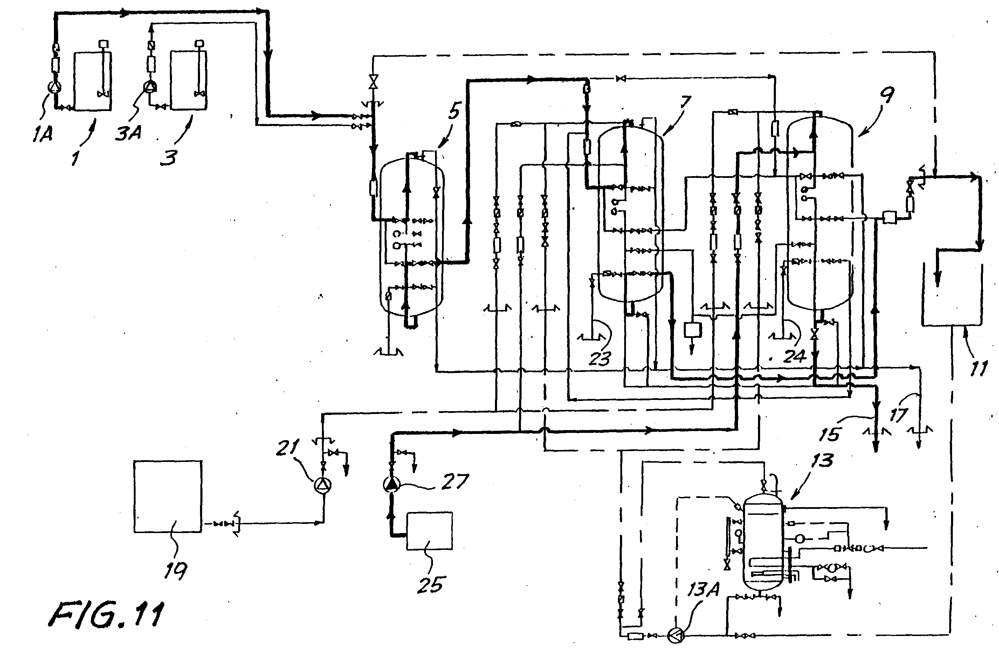

Figs. 1 to 11 show a partial scheme of an effluent-water processing plant including a regeneration system according to the invention; the paths of the water or of the liquids used in the various stages described for the regeneration of the filter beds are shown in bold in the figures.

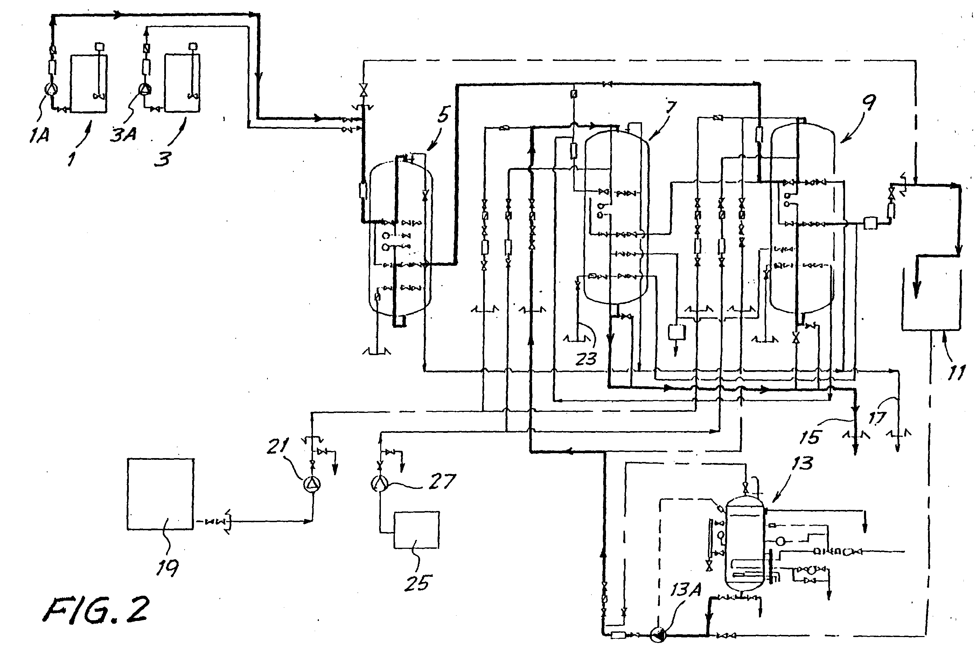

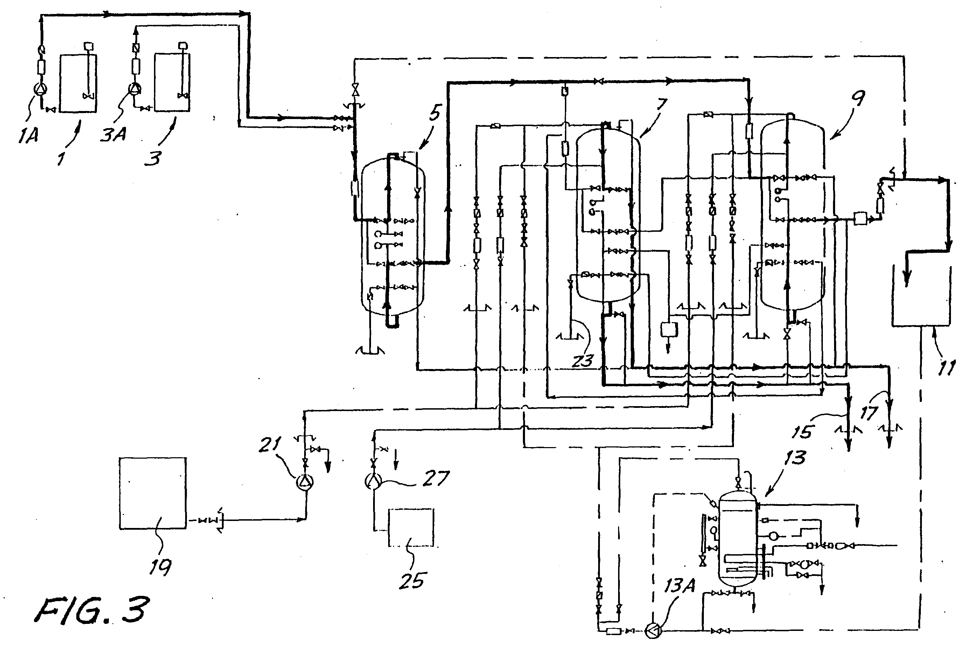

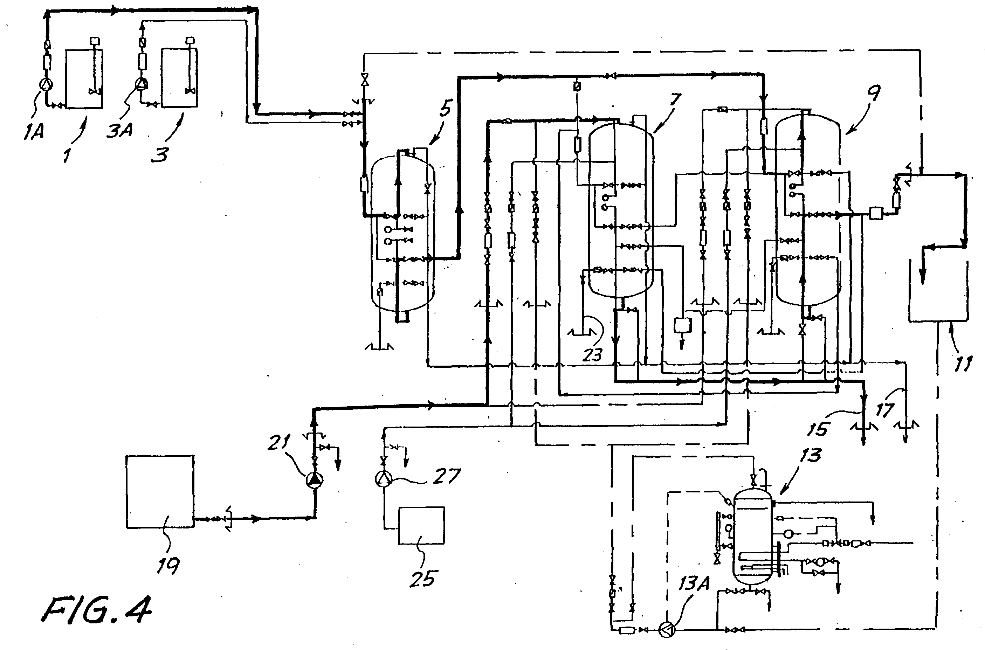

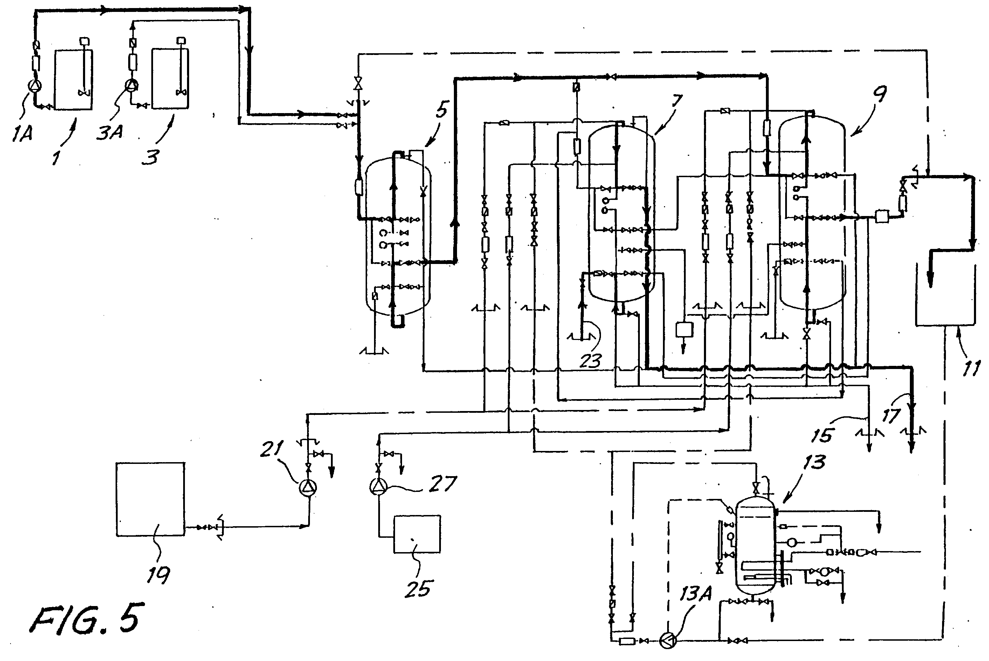

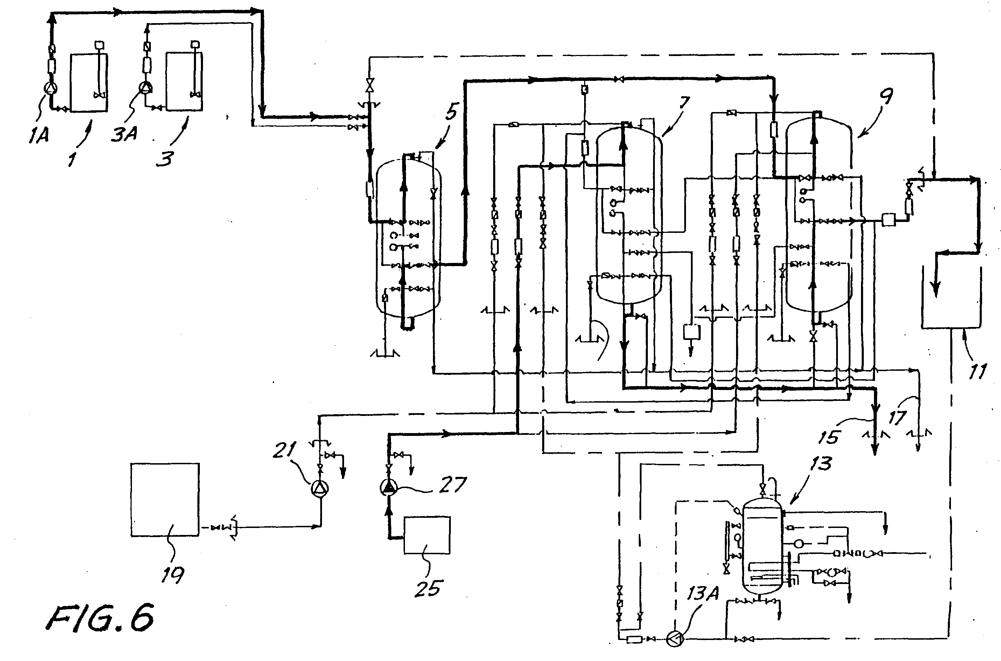

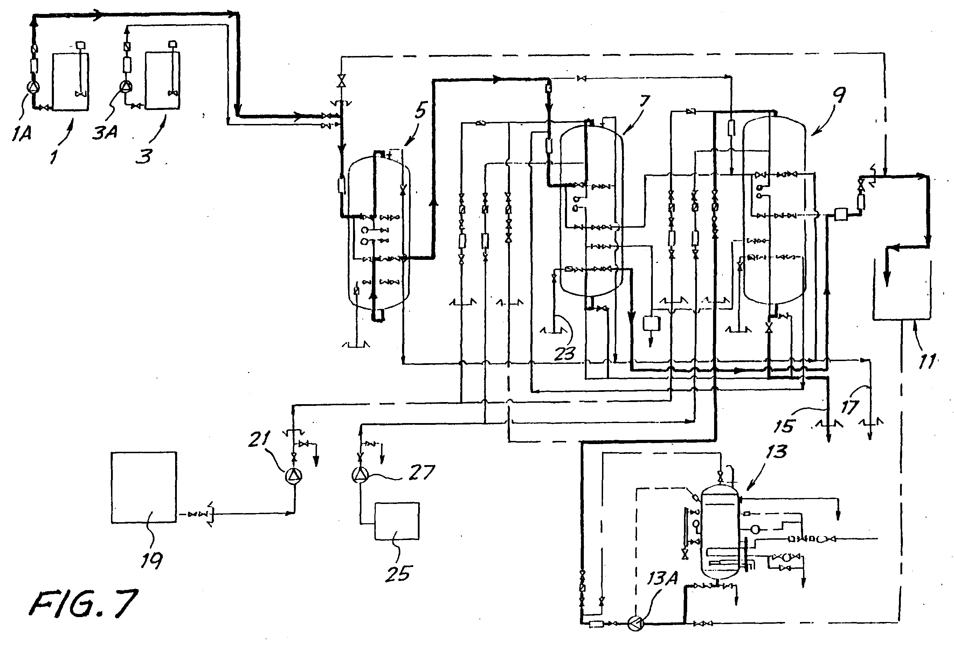

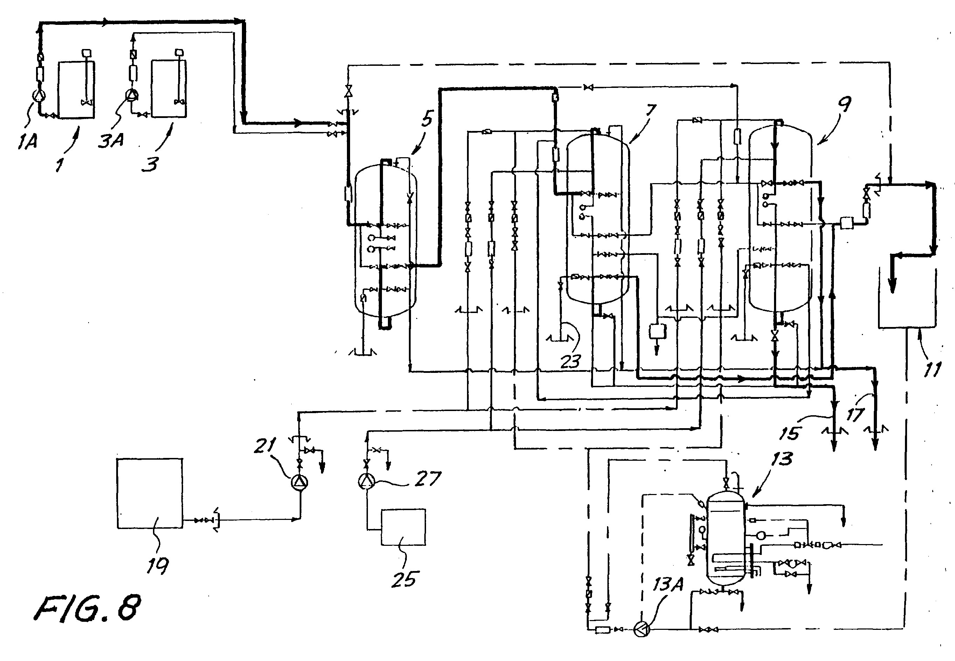

The water to be processed is taken from a tank 1, 3 (Fig. 1) by means of pumps 1A, 3A respectively and is conveyed to an inert filter 5 and to two filter beds 7, 9 comprising a polymer of the type described in the preamble. The water to be processed passes in series through the filter 5 and said filter beds 7, 9 from the top downward, it deposits on the adsorbent surface of the polymer granules the substances contained in suspension and in solution, and, once it has reached a sufficient degree of clarity, it is collected in a storage tank 11. After a certain period of processing, the working volume of the filter bed 7 - which, being the first of the series, is saturated first - is lowered in a manner which is no longer acceptable, with a decrease in the degree of transparency of the processed water which leaves, at the bottom of this bed, below a preset threshold. The circulation of the water in the filter bed 7 is interrupted manually or by means of known automated systems, by actuating appropriate valves, and a washing stage is begun in the bed (Fig. 2). In this stage, clean water heated to a relatively high temperature (for example 90°C) is passed through the filter bed 7 by means of a pump 13A, this water originating from a central unit 13 for producing hot water, so as to heat the polymer granules of the bed, thereby dilating them. When the filter bed 7 has reached the desired temperature, the hot water is drained out at the bottom of the tank containing this bed (Fig. 3) and is conveyed to a discharge unit via a pipe 15, while air is allowed to enter into the top part of this tank by means of a pipe 17. A stage of actual regeneration of the bed 7 then follows, in which a regenerative solution at room temperature, taken from a tank 19 (Fig. 4) by means of a pump 21, is passed through the filter bed 7. This solution is, for example, a sodium hydroxide solution and is fed into the top of the filter bed 7 container until this bed is completely submerged. After a residence time during which sparging is started by counter-current circulation of compressed air originating from a pipe 23 (Fig. 5), the sodium hydroxide solution is removed via the pipe 15. This is followed by a further stage of washing with clean hot water (Fig. 2) with reduction of the pH (for example to 9-10) and a second stage of regenerating the bed 7 by means of a regenerative liquid at room temperature which is obtained from a tank 25 (Fig. 6) by means of a pump 27. Said regenerative liquid contains, for example, alcohols or solvents, and is circulated in the container of the bed 7 during a second stage of sparging with compressed air (Fig. 5). At the end of the second regeneration stage, the regenerative liquid is removed by means of the pipe 15, and a further stage of washing with clean hot water is carried out (Fig. 2). This subsequent stage of regeneration with the solution from the tank 25 (Fig. 6) can be repeated together with further sparging with compressed air (Fig. 5), followed by a stage of washing with hot water (Fig. 2) and reduction of the pH.

The repeated alternation of the washing at high temperature and passage of the regenerative solution at a substantially lower temperature causes successive dilations and contractions of the polymer granules, with detachment and expulsion of the adsorbed substances.

After this, the filter bed 7 thus regenerated can be reused by circulating water to be processed through this bed (Fig. 1).

Throughout the process of regenerating the filter bed 7, processing of the effluent can continue through the filter bed 9 alone, which, after a certain period, can also reach saturation. At this point, it is regenerated by means of a process similar to the one carried out on the bed 7. In particular, the process includes a succession of stages of washing (Fig. 7) with hot water obtained from the central unit 13 by means of the pump 13A, draining (Fig. 8) by means of the pipe 15, and regeneration by a first solution containing sodium hydroxide (Fig. 9) contained in the tank 19 and conveyed by the pump 21, sparging (Fig. 10) with compressed air injected counter-currentwise by means of a pipe 24 and regeneration by a liquid containing alcohols or solvents (Fig. 11) which is obtained from the tank 25 by means of the pump 27. During this process, processing of the effluent can continue in the filter bed 7, if it is not saturated or undergoing regeneration.

It is understood that the drawing shows only one embodiment, given purely by way of practical demonstration of the invention, it being possible for the forms and arrangements of this invention to vary without thereby departing from the scope of the underlying concept of the invention. Any reference numbers present in the claims included are given to facilitate the reading of the claims with reference to the description and to the drawing, and do not limit the scope of the protection represented by the claims.

## Claims

1. Process for regenerating a filter bed (7, 9) comprising an adsorbent and/or functionalized polymer in the form of granules, characterized in that at least two fluids with different temperatures are passed successively through the fluid bed, so as to induce, at each passage of fluid, a change in the volume of the granules in order to cause detachment of the adsorbed substances and to enable them to be carried away by these fluids or by subsequent washes.

2. Process according to Claim 1, characterized in that said passages are repeated an even greater number of times in succession.

3. Process according to Claim 1 or 2, characterized in that one of said fluids is steam and the other is a regenerative solution at room temperature.

4. Process according to Claim 1 or 2, characterized in that one of said fluids is a regenerative solution at a temperature of between 70 and 95°C and the other is a regenerative solution at room temperature.

5. Process according to Claim 3 or 4, in which, in the stage of introduction of the regenerative solution, a gaseous fluid is bubbled (sparging) through the bed in order to help circulate the solution on the surface of the polymer granules and to give rise to a further mechanical action for detachment of the adsorbed substances from the granules.

6. Process according to any one of the preceding claims, in which one regenerative solution is an aqueous solution of an alkaline hydroxide.

7. Process according to Claim 6, in which said hydroxide is caustic soda.

8. Process according to any one of Claims 1 to 5, in which one regenerative solution is an aqueous solution of a strong acid.

9. Process according to Claim 8, in which said strong acid is hydrochloric acid.

10. Process according to Claims 3 to 9, in which said regenerative solutions at room temperature comprise an aqueous solution of an alkaline hydroxide and an aqueous solution of a strong acid, which are passed through the filter bed one after the other, in any order.

11. Process according to one or more of the preceding claims, comprising a subsequent stage of introduction of a regenerative liquid containing at least one alcohol and/or solvent through the filter bed.

12. Process according to Claim 11, in which said alcohol is chosen from the group ethanol, methanol, propanol, isopropanol and butanol.

13. Process according to any one of the preceding claims, characterized in that, between the passages of said fluids, the filter bed is subjected to an intermediate washing operation.

14. Process according to Claim 13, in which, during said intermediate washing operation, heating of the filter bed is carried out.

15. Process according to one or more of Claims 11 to 14, in which, during said subsequent stage of introduction of the regenerative liquid, a subsequent sparging operation is carried out through the filter bed.

16. Process according to one or more of the preceding claims, comprising the following successive stages:
A) heating the filter bed by circulating hot water, for example to 90°C;
B) cooling the filter bed by circulating a regenerative solution at room temperature;
C) sparging;
D) washing the filter bed while heating it;
E) optionally repeating stages (B), (C) and (D);
F) a final washing operation.

17. Process according to one or more of the preceding claims, in which said washing stages are carried out by flushing with water which is optionally heated.

18. Process according to one or more of Claims 1 to 17, in which said washing stages are carried out by steam-stripping.

19. Plant for regenerating a filter bed (7, 9) comprising an adsorbent polymer, characterized in that this plant comprises means of extemporaneous heating (13) of the filter bed.

20. Plant according to Claim 19, in which said means comprise a central unit for producing hot water (13) and means (13A) for circulating this water through the filter bed until the bed has reached the desired temperature.

21. Plant according to Claim 19, in which said means comprise a steam generator and means for circulating the steam through the filter bed until this bed reaches the desired temperature.

22. Process for regenerating a filter bed comprising granules of an adsorbent polymer, and plant for carrying out this process; everything as described above and represented by way of example in the attached drawing.
